# EUROPEAN PATENT APPLICATION

(11) **EP 4 837 414 A1**
(43) Date of publication of application: **11.11.2026**
(21) Application number: 26173852.0
(22) Date of filing: 22.04.2026
(51) Int. Cl.: A01M 7/00, H04N 7/18, H04N 23/60

(54) **A CAMERA SYSTEM FOR A SPRAYER APPARATUS**

(30) Priority: 06.05.2025 GB 202506917
(71) Applicant: Agco Do Brasil Soluções Agrícolas Ltda, São Paulo, 13213-105 (BR)
(72) Inventor: Schenkel, Guilherme Mikael, 92420-000 Canoas (BR)
(74) Representative: AGCO Intellectual Property Department

(57) **Abstract**

A camera system for a sprayer apparatus, such as a boom sprayer. The camera system is configured to, responsive to a trigger event, store a portion of continually captured image data. The continually captured image data is captured by one or more cameras having a field of view that includes a boom of the sprayer apparatus.

## Description

### CROSS-REFERENCE TO RELATED APPLICATIONS

### FIELD

Embodiments of the present disclosure relate to the field of agriculture, and in particular to sprayer apparatus for use in agriculture.

### BACKGROUND

With ever-increasing population numbers and an ongoing interest in more environmentally friendly farming practices, there is a desire to improve agricultural practices.

Agricultural sprayers, commonly known as sprayer apparatus, are used in the application of various materials to field crops. Such systems apply various chemicals in the form of a fluidic spray for the purposes of crop protection, e.g. through the use of appropriate pesticides or herbicides, or for the purposes of promoting plant growth, e.g. through use of liquid plant fertilizer. Agricultural sprayers may be provided as self-propelled sprayers, or as systems to be mounted to an agricultural tractor, e.g. as a towed or hitch-mounted implement.

Typically, an agricultural sprayer comprises a boom upon which one or more fluid application devices (commonly spray nozzles) are mounted. These fluid application devices are distributed in a spaced relationship along the length of the boom, and are fluidically connected to a fluid tank, e.g., by one or more pipes, ducts, valves, pump and/or other fluidic connectors. Fluid passes from the fluid tank and is applied by the fluid application device(s).

An ongoing problem with the use of sprayer apparatus is that the apparatus is submitted to different types of maneuvers and terrain conditions depending upon the specific user requirements. A particular problem occurs when these maneuvers/conditions are outside of the original design scope or testing conditions for the apparatus, as these may cause unexpected stresses and/or damage to the sprayer apparatus. For instance, a farmer may have an unusually shaped field, that requires specific and/or unusual maneuvering of the sprayer apparatus to achieve full coverage.

### BRIEF SUMMARY

According to examples in accordance with this disclosure, there is provided a camera system for a sprayer apparatus.

The camera system comprises one or more cameras configured to continually capture image data, wherein a combined field of view of the one or more cameras comprises a portion of a boom of the sprayer apparatus. The camera system further comprises a processing system configured to receive the continually captured image data from the one or more cameras, and responsive to a trigger event, store a portion of the continually captured image data, wherein the portion is a portion of the continually captured image data captured immediately before and/or immediately after the trigger event.

This camera system enables real-time monitoring of the sprayer apparatus boom, allowing for immediate recording of any visual issues or indicators with the boom when a trigger event occurs. The ability to store image data from before and/or after a trigger event provides crucial context for analyzing and addressing problems or causes of a trigger event. This provides useful information for improving the overall efficiency and effectiveness of the spraying operation.

In some examples, the portion of continually captured image data is image data captured over a predefined duration.

By capturing data over a predefined duration, the system ensures a comprehensive record of events surrounding the trigger, facilitating thorough analysis and troubleshooting. This feature allows operators to review a consistent timeframe of data for each event, streamlining the review process and improving decision-making.

In some examples, the predefined duration is no less than 15 seconds, e.g., no less than 30 seconds.

Setting a minimum duration of 15 seconds (or 30 seconds) provides sufficient context both before and after an event, capturing the full sequence of relevant actions. This extended timeframe increases the likelihood of identifying the root cause of any issues or causes of a trigger event, to help understand the complete impact of any anomalies.

In some examples, the camera system further comprises a user input interface communicatively coupled to the processing system, wherein the user input interface is configured to generate the trigger event responsive to a user interaction with the user input interface.

Incorporating a user input interface allows an operators to manually initiate data capture when they observe potential issues, enhancing the system's flexibility and responsiveness. This feature allows for the capture of events that may not be automatically detected, improving the overall monitoring capabilities of the system, and allows a direct user interaction to trigger the recording of image data.

In some examples, the user input interface comprises a button that, when pressed, generates the trigger event. This provides an intuitive and quick method for operators to trigger data capture, e.g., reducing response time to potential issues.

In some examples, the camera system further comprises an image processing system configured to receive the continually captured image data, determine whether or not there is a boom configuration error by processing the continually captured image data, and responsive to determining that there is a boom configuration error, generate the trigger event.

Automated detection of boom configuration errors through image processing enhances the system's ability to identify and record issues without constant human oversight. This increases the reliability of error detection and ensures that critical events are captured even when not immediately identified or reacted upon by an operator of the sprayer apparatus.

In some examples, the one or more cameras comprises two or more cameras.

Utilizing multiple cameras expands the coverage area and provides a more comprehensive view of the sprayer apparatus. This multi-camera setup enhances the system's ability to detect issues across different parts of the boom and/or overall sprayer apparatus simultaneously, improving overall monitoring efficiency.

In some examples, a field of view of each camera is non-overlapping.

Non-overlapping fields of view maximize the total area monitored by the camera system, ensuring efficient use of resources. This configuration provides a wider coverage area without redundancy, allowing for more effective monitoring of the entire sprayer apparatus.

In some examples, the camera system comprises a first rear-facing camera and a second rear-facing camera for mounting in front of the boom and to each side of a drive vehicle to which the boom is coupled. Positioning rear-facing cameras on either side of the drive vehicle provides a comprehensive view of the boom's operation from multiple angles.

In some examples, the camera system comprises a first laterally outward facing camera and a second laterally outward facing camera mounted at a central area of the boom and each facing outward in opposite lateral directions towards a respective boom tip.

Laterally outward facing cameras mounted at the boom's central area offer an expansive view along a length of the boom. This configuration allows for detailed monitoring of spray patterns and nozzle performance across the full width of the boom, facilitating early detection of issues at the boom tips or with vibrations or bending along the boom's length.

In some examples, the camera system further comprises a property monitoring sensor configured to monitor one or more properties of the sprayer apparatus, wherein the processing system is configured to, responsive to the trigger event, record and store the monitored one or more properties of the sprayer apparatus.

Integrating property monitoring sensors with the camera system provides a more comprehensive view of the sprayer apparatus's performance. In particular, correlating sensor data with visual information enhances the diagnostic utility of the stored information, allowing for more accurate identification of issues and their root causes.

In some examples, the property monitoring sensor is configured to continually monitor the one or more properties of the sprayer apparatus to produce continually monitored property data, and the processing system is configured to, responsive to the trigger event, store a portion of the continually monitored property data, wherein the portion is a portion of the continually monitored property data monitored during a time period as the portion of continually captured image data.

Synchronizing the storage of property data with image data ensures a comprehensive record of the sprayer apparatus's state during trigger events. This enables operators or other (manual or automated) reviewers of the stored data to correlate visual observations with specific property measurements for enhanced problem-solving.

In accordance with another proposed approach, there is provided a sprayer apparatus comprising a product tank, a boom comprising a plurality of spray nozzles, a delivery system for delivering fluid from the product tank to the spray nozzles, and the camera system as described in any of the preceding examples.

There is also provided a computer-implemented method comprising receiving continually captured image data from one or more cameras configured to continually capture image data, wherein a combined field of view of the one or more cameras comprises a portion of a boom of a sprayer apparatus, and responsive to a trigger event, store a portion of the continually captured image data, wherein the portion is a portion of the continually captured image data captured immediately before and/or immediately after the trigger event.

In some examples, there is provided a computer program product comprising computer program code means which, when executed on a computing device having a processing system, cause the processing system to perform all of the steps of the computer-implemented method described above.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 illustrates a sprayer apparatus;
FIG. 2 illustrates a proposed camera system;
FIG. 3 illustrates candidate positions for a camera of the camera system;
FIG. 4 illustrates the proposed camera system; and
FIG. 5 is a flowchart illustrating a proposed method.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manner.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items. Thus, A and/or B means "only A", "only B" or "A and B". Similarly, A, B and/or C means: "only A"; "only B"; "only C"; "A and B"; "A and C"; "B and C"; or "A and Band C".

The present disclosure relates to a camera system for a sprayer apparatus, such as a boom sprayer. The camera system is configured to, responsive to a trigger event, store a portion of continually captured image data. The continually captured image data is captured by one or more cameras having a field of view that includes a boom of the sprayer apparatus.

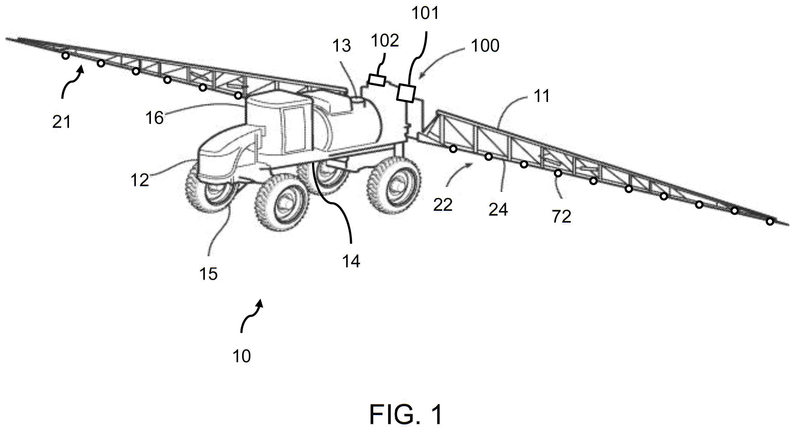

FIG. 1 illustrates a (self-propelled) sprayer apparatus 10 for the sake of contextual understanding. The sprayer apparatus 10 comprises a boom 11, a drive vehicle 12, and a product tank 13. The boom carries or comprises a plurality of spray nozzles 72 for delivering or applying fluid to an external environment (e.g., a field or other agricultural environment).

The boom 11 is used to distribute the fluid from the product tank 13 over a wide swath as the sprayer apparatus 10 is driven through the field. The boom 11 may include two or more portions 21, 22 that can fold for transport on public roadways, and unfold (i.e., to the position shown in FIG. 1) for field operations. Each portion may comprise a supporting structure 24 upon which one or more spray nozzles are mounted.

The drive vehicle 12 is configured for facilitating control of a movement and/or direction of the sprayer apparatus. In some examples, the drive vehicle 12 may be detachable from the boom, but this is not essential.

By way of example only, the drive vehicle 12 may comprise a chassis 14 supported by wheels 15 or a track. The drive vehicle may include an operator cab mounted on the chassis. The operator cab may house controls for the sprayer apparatus. An engine may be mounted on a forward portion of the chassis in front of the operator cab or may be mounted on a rearward portion of the chassis behind the operator cab. The engine may, for example, comprise a diesel engine or a gasoline-powered internal combustion engine, a battery-powered electric motor, etc. The engine provides energy to propel the drive vehicle (and thereby sprayer apparatus) through an agricultural environment, such as a field, on the wheels or tracks, and may also provide energy to spray fluids (e.g., liquids, gases) from the spray nozzles.

The product tank 13 may, for instance, store fluids (e.g., water, liquid fertilizer and/or chemicals) for application to the external environment via the spray nozzles.

The sprayer apparatus also comprises a delivery system for delivering fluid from the product tank to the spray nozzles. The delivery system may, for instance, comprise any one or more from a selection of a group comprising: ducts, pipes, channels, pumping arrangements; valves and so on. Example delivery systems suitable for sprayer apparatus are well known in the art.

The present disclosure proposes a camera system 100 for (use with) a sprayer apparatus, such as the sprayer apparatus 10 (FIG. 1).

The camera system comprises one or more cameras 101, 102 configured to continually capture image data, wherein a combined field of view of the one or more cameras comprises a boom of the sprayer apparatus. In other words, the camera system is arranged such that at least a part of the boom (e.g., a majority of the boom) of the sprayer apparatus is within view of at least one of the cameras 101, 102 at all times during operation. This allows for continuous monitoring and recording of the boom.

It will be appreciated that the camera(s) is/are configured to "continually capture" only when in an operational state (e.g., the camera system is powered on or is active). In particular, the one or more cameras may be configured to acquire image data at regular intervals or in a continuous stream (e.g., in the form of video data) while the camera system is in an operational state.

The camera system also comprises a processing system (not visible in FIG. 1). The processing system is designed to control when image data captured by the one or more cameras is stored or recorded.

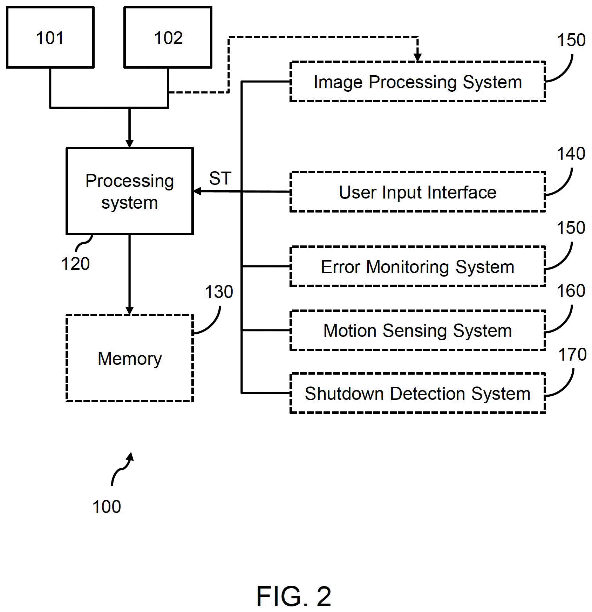

FIG. 2 schematically illustrates a proposed camera system 100, which comprises the one or more cameras 101, 102 (here: two cameras) and the processing system 120.

The processing system 120 is configured to receive the continually captured image data from the one or more cameras. Thus, the processing system is communicatively coupled to the one or more cameras, e.g., via one or more wired and/or wireless communication links.

The processing system 120 is configured to, responsive to a trigger event (i.e., a trigger event), store a portion of the continually captured image data. This portion is a portion of the continually captured image data captured immediately before and/or immediately after the trigger event.

As used herein, the term "immediately" refers to a time period that is substantially concurrent with or closely following a specified event or action, without significant delay or intervening occurrences (e.g., as quickly as possible within the constraints of the system - e.g., accounting for processing delay, latency, activation times, access times and so on). Thus, "immediately" may in practice encompass a timeframe ranging from instantaneous to within a few seconds of the referenced event or action, depending on the context and capabilities of the (processing) system.

The trigger event may be provided or indicated to the processing system 120 via a trigger signal ST. In particular, the processing system may monitor a received trigger signal, which may transition from a first state to a second state to indicate the occurrence of a trigger event. The processing system may be configured to detect this transition and initiate the storage of the relevant portion of image data in response.

The trigger signal ST may be generated or controlled by a component external to the processing system (e.g., a user interface, a detection system and so on) and/or the processing system 120 itself. Suitable examples of trigger events and trigger signals are later described.

More particularly, the (external) component and/or processing system may be configured to transition the trigger signal ST from the first state to the second state to indicate (to the processing system) that a trigger event has occurred. This state transition thereby functions as an indicator to the processing system that a trigger event has occurred.

The processing system 120 may be configured to store the portion of continually captured image data in a memory device 130 communicatively connected to and/or associated with the processing system 120.

The memory device 130 may comprise any suitable type of storage media such as a solid-state drive, a hard disk drive, or any other form of non-volatile memory. In some examples, the memory device may be integrated within the processing system itself, while in other examples it may be a separate component connected to the processing system via an interface and/or bus.

In some examples, when/if the storage of the memory device is full, the processing system will continue to store (new) portions of image data responsive to a (new) trigger event, but recording over the oldest.

In other words, the camera system may employ a circular buffer or a first-in-first-out (FIFO) strategy when the memory device reaches its capacity. As new trigger events occur, the system continues to store the corresponding portions of image data. However, to accommodate this new data, it overwrites the oldest stored portions. This approach ensures that the most recent and most relevant data is always preserved. This method also maintains a rolling window of the most recent trigger events and their associated image data, allowing for ongoing analysis and review of recent sprayer apparatus operations.

This feature is particularly valuable in scenarios where the sprayer apparatus operates for extended periods without the opportunity to offload or clear the stored data. It ensures that the camera system remains functional and continues to capture the circumstances in the vicinity of trigger events, even under storage constraints.

In some examples, the memory device 130 comprises or is a remote memory device, such as a cloud-based storage system. This allows for remote access and backup of the captured image data. In such examples, the processing system may communicate with the remote memory device through any suitable network protocols and technologies. For instance, the control system (e.g., the processing system of the control system) may comprise a wireless communication module to establish a connection and communicate with the cloud-based storage system. This connection may be facilitated through any suitable wireless communication protocol, such as LoRaWAN, any cellular data network (e.g., 4G, 5G), or a satellite communication system, e.g., dependent upon any available infrastructure.

Any stored portion(s) of image data can later be analyzed to understand boom behavior, investigate incidents, or improve spraying operations. This capability is particularly valuable for reviewing unexpected events or studying the sprayer's performance during challenging maneuvers or terrain conditions.

The portion of the continually captured image data (stored responsive to the trigger event) may include image data captured before, during, and/or after the event that triggered the storage. This allows for a comprehensive view of the circumstances surrounding the trigger event, providing context for later analysis.

The portion of the continually data (stored responsive to the trigger event) may be image data captured during a period of time having a predefined duration. This period of time is defined by the time at which the trigger event is received by the processing system (i.e., a trigger event).

More specifically, the time at which the trigger event is received by the processing system defines the start and end of the time period over which the captured image data forms the portion of the continually captured image data. For instance, the period of time may begin, end or include the time at which the trigger event is received by the processing system.

For example, if the system is configured to store 30 seconds of footage around a trigger event, it might save 15 seconds of footage before the trigger and 15 seconds after. Alternatively, it could be set up to store 20 seconds before and 10 seconds after, or any other combination that adds up to the predefined duration.

Further examples are given later in this disclosure.

A number of example trigger events are hereafter described. It will be appreciated that processing system may be configured to respond or react (e.g., to store the portion of continually monitored image data) responsive to the occurrence of any one or more of these trigger events. That being said, it should be understood that not all embodiments of the proposed camera system may use every type of trigger event mentioned. Rather, in some examples, only a subset (i.e., not all) of the described trigger events may be employed.

The trigger event may, for instance, be a user-initiated or user-controlled trigger event, i.e., a manually-controlled trigger event. This allows a user or operator of the sprayer apparatus to control the moment(s) when the image data is stored, enabling capture of specific events or maneuvers of interest in the vicinity of the trigger event.

Thus, the camera system may further comprise a user input interface 140 communicatively coupled to the processing system. The user input interface is configured to generate the trigger event responsive to a user interaction with the user input interface.

The user input interface may take any suitable physical interface form, such as a physical button, a touchscreen interface, or a voice-activated command system. By allowing user-initiated trigger events, the camera system enables the capture of specific moments or maneuvers that the operator deems important or noteworthy. For instance, when a problem occurs or when the operator wants to record a maneuver, the operator may interact with the user input interface, and the processing system will store or save image data covering a time period defined by the time at which the interaction occurs.

As a specific example, the user input interface may comprise a button that, when pressed, generates the trigger event.

In particular, the user input interface 140 may be configured to control the trigger signal ST received by the processing system. For instance, the user input interface 140 may transition the trigger signal ST from a first state to a second state responsive to a user interaction (e.g., the pressing of a button), thereby indicating to the processing system that a trigger event has occurred. This state transition thereby functions as an indicator to the processing system that a trigger event has occurred.

As previously described, upon detecting this change in the trigger signal, the processing system initiates the storing the relevant portion of captured image data. This mechanism allows for precise timing of data storage relative to user-identified events of interest, ensuring that critical moments are captured and preserved, e.g., for later analysis.

The trigger event may comprise an automated trigger event, examples of which are hereafter described.

One example of an automated trigger event is a trigger event indicative of a boom configuration error.

The camera system may further comprise an image processing system 150 configured to receive the continually captured image data (from the one or more cameras 101, 102); and determine whether or not there is a boom configuration error by processing the continually captured image data. The image processing system may, responsive to determining that there is a boom configuration error, generate the trigger event.

More specifically, the image processing system may be configured to control the trigger signal ST received by the processing system. For instance, the image processing system 150 may transition the trigger signal ST from a first state to a second state responsive to determining that there is a boom configuration error.

The image processing system may detect a boom configuration error by analyzing the continually captured image data. In some examples, the image processing system may employ one or more computer vision techniques to identify deviations from expected boom geometry or positioning.

By way of example, the image processing system may compare the current boom configuration (indicated in the continually captured image data) against desired operating parameters (e.g., control parameters for the boom). This may comprise analyzing the boom's shape, angle, slope, or position relative to the sprayer vehicle or ground.

For instance, the image processing system may perform edge detection to identify the outline of the boom in the captured image data. Any significant deviations from an expected outline may indicate a boom configuration error. As another example, processing system may track specific points or markers on the boom. Unexpected movement or positioning of these points or markers may indicate a boom configuration error. As yet another example, the image processing system may employ temporal analysis to identify any changes in the boom configuration over time. Sudden or unexpected changes may indicate a boom configuration error.

As a specific example, the image processing system may be configured to identify a boom slope by processing the image data (e.g., relative to the crop surface and/or the drive vehicle). The image processing system may be configured to identify a boom configuration error (and thereby identify a trigger event) responsive to the boom slope not matching an intended or desired boom slope, e.g., as defined by control parameters for the boom.

Although illustrated as a separate module, in practice, the image processing system may be integrated within the processing system 120. The image processing system may utilize dedicated hardware, such as graphics processing units (GPUs) or field-programmable gate arrays (FPGAs), to efficiently perform complex image analysis tasks in real-time.

A wide variety of other example approaches for identifying a boom configuration error by processing image data will be readily apparent to the skilled person.

Another example of an automated trigger event is a trigger event indicative of an operational error of the sprayer apparatus.

The camera system may include an error monitoring system 160 configured to generate a trigger eventer responsive to any detected errors or anomalies in the operation of the sprayer apparatus.

The error monitoring system may comprise one or more sensors for generating sensor data responsive to or representing one or more operational parameters of the sprayer apparatus (e.g., boom position, fluid pressure, nozzle flow rates, vehicle speed, and boom vibration). The error monitoring system may further comprise a data processing unit configured to receive and process the sensor data, e.g., to compare the sensor data to predefined expected sensor data, which indicates a desired or expected value for each operational parameter represented in the sensor data. The data processing unit may be configured to identify whether or not there is (significant) deviation of the sensor data from the expected sensor data, to identify whether or not an error has occurred. This may comprise, for instance, using one or more determining if any values of the sensor data are more than a predetermined distance or percentage away from corresponding values in the expected sensor data, indicating an error. Other examples approaches for identifying errors are well known to the skilled person.

Responsive to detecting the occurrence of an error, the error monitoring system may indicate a trigger event. More specifically, the error monitoring system may be configured to control the trigger signal ST received by the processing system. For instance, the error monitoring system 160 may control the trigger signal ST to be in a second state responsive to determining that there is an error.

Another example of an automated trigger event is a trigger event indicative of a sudden change in speed or direction of the drive vehicle or sprayer apparatus.

The camera system 100 may comprise a motion sensing system 170 (e.g., comprising a motion sensor, accelerometer or other speed/direction sensor) configured to detect rapid accelerations, decelerations, or changes in heading of the sprayer apparatus, such as a sudden movement or a sudden stoppage. When such a sudden movement or stoppage is detected, the motion sensing system may trigger or generate a trigger event.

By way of example, motion sensing arrangement may produce motion data indicative of a speed and/or direction of movement (e.g., acceleration and/or angular velocity). If the value(s) of the motion data exceed a respective predefined threshold within a short time frame, this may indicate the occurrence of a sudden movement or stoppage of the sprayer apparatus, triggering the trigger event.

A sudden stoppage might occur if the sprayer apparatus encounters an obstacle or experiences a mechanical failure. Similarly, a sudden movement could result from the operator taking evasive action to avoid an obstacle, or from the sprayer apparatus traversing uneven terrain. Both scenarios could potentially impact the boom's stability and spray pattern, making them important events to capture.

When the motion sensing system detects such a sudden movement or stoppage, it may generate a trigger event. This trigger event prompts the camera system to store the relevant portion of continually captured image data, providing visual context for the detected motion anomaly. By capturing footage in the vicinity of any such events, the system enables operators and analysts to review the circumstances leading up to, during, and immediately following the sudden movement or stoppage, facilitating a more comprehensive understanding of the sprayer apparatus's performance.

More specifically, the motion sensing system may be configured to control the trigger signal ST received by the processing system. For instance, the motion sensing system 170 may control the trigger signal ST to be in a second state responsive to determining that there is a sudden movement or a sudden stopping of the sprayer apparatus.

Another example of an automated trigger event is a trigger event indicative of a shut down of the sprayer apparatus.

The camera system 100 may therefore comprise a shutdown detection system 180 configured to detect when the sprayer apparatus is being shut down or powered off. In particular, the shutdown detection system may communicate with a control system of the sprayer apparatus to detect when a shutdown sequence is initiated. The shutdown detection system may monitor various signals or parameters such as engine status, electrical system power, hydraulic pressure, or user-initiated shutdown commands to determine when the sprayer apparatus is being powered off.

The shutdown detection system may generate a trigger event upon detecting the initiation of a shutdown sequence or power-off procedure for the sprayer apparatus. More specifically, the shutdown detection system may be configured to control the trigger signal ST received by the processing system. For instance, the shutdown detection system 180 may control the trigger signal ST to be in a second state responsive to determining that there is a shutdown of the sprayer apparatus.

This approach recognizes that, in the event of a problem, the sprayer apparatus is likely to be shut down (e.g., manually or automatically).

By triggering image data storage during shutdown, the camera system is able to capture crucial information about the state of the sprayer apparatus and its boom just before operations cease. This is particularly valuable for diagnosing or identifying issues or problems that may have led to the shutdown, as it provides a visual record of the spraying apparatus's final operational moments. The stored footage can reveal important details such as boom positioning, spray patterns, or any visible malfunctions that occurred immediately prior to shutdown.

Additionally, this trigger event ensures that data is captured even if the operator forgets or is unable to manually initiate recording during an emergency shutdown situation. By automatically preserving this period of operation, the camera system improves the ability to: conduct post-incident analysis, improve troubleshooting processes, and facilitate the prevention or reduction of similar issues in future operations.

A wide variety of other trigger events, and suitable systems for generating such trigger events, will be readily apparent to the skilled person.

It has been previously described how the portion of continually captured image data, stored responsive to a trigger event, contains a part from before the trigger event and/or after the trigger event.

By way of example, the portion of continually captured image data, stored responsive to a trigger event, may comprise a part of the continually captured image data from after the trigger event.

In such examples, the processing system may be configured to record and store, e.g., in the memory device 130, a first sub-portion of a first predetermined duration of the continually captured image data received by the processing system immediately after the processing system receives the trigger event.

In this way, the trigger event may trigger the recording of a first sub-portion of the continually captured image data, i.e., a post-trigger event recording. This approach ensures that any relevant events or changes in the boom's configuration that occur as a consequence of the trigger event are recorded.

The first predetermined duration may be defined by a user and/or manufacturer. As a suitable working example, the first predetermined duration is preferably no less than 15 seconds, e.g., no less than 30 seconds. Such durations allows for sufficient capture of events following the trigger event, providing valuable context for later analysis.

In some examples, the processing system may be configured to record and store (e.g., in the memory device 130) all continually captured image data captured up until a second trigger event. Thus, the processing system may be configured to record and store a continuous sequence of image data starting from a predefined point, such as the occurrence of a first trigger event, and ending at the second trigger event. This approach ensures that the system captures a complete timeline of events between the two trigger events, providing a comprehensive set of image data for analysis. For instance, this functionality may be useful in scenarios where an operator or automated system identifies a sequence of events or conditions that require detailed review, allowing for uninterrupted recording of all relevant image data during the specified timeframe.

Examples of suitable trigger events have been previously described, and these may also be employed and/or repurposed for use as the second trigger event.

For instance, the second trigger event may be a user-initiated or user-controlled trigger event, i.e., a manually-controlled trigger event. This type of trigger event allows a user or operator of the sprayer apparatus to exercise direct control over the precise moment(s) when image data is no longer captured. This enables an operator to manually indicate and capture events or operational conditions of interest.

Suitable examples of a user input interface 140 for generating a trigger event - which may function as the second trigger event - have been previously described. These interfaces may include physical buttons, touchscreens, voice-activated commands, or other intuitive mechanisms that enable the operator to interact with the system easily and efficiently. For instance, a physical button mounted within the operator's cabin could be pressed to signal the end of data capture, or a touchscreen interface could provide a graphical control for initiating and terminating recordings.

Any automated trigger event previously described may also function as the second trigger event. For instance, a second trigger event could be generated by an image processing system detecting an end or resolution to a boom configuration error. As a working example, the trigger event may be an automated detection of a boom configuration error (detected by an image processing system), and the second trigger event may be an automated detection of a resolution of the boom configuration error (detected by the same image processing system). Such examples ensure that the captured image data includes the full sequence of events leading up to and resolving the error, providing a comprehensive dataset for troubleshooting and analysis.

Another example of a second trigger event is the detection of an operational error by an error monitoring system. For instance, if the system identifies a significant deviation in nozzle flow rates, fluid pressure, or boom vibration levels (e.g., which detection may function as the trigger event), the system may generate the second trigger event responsive to the operational parameters returning to normal.

Similarly, a second trigger event could be generated by a motion sensing system. For example, if the motion sensing system detects a rapid deceleration or a sharp turn, it could generate a trigger event (e.g., to initiate a capture of image data), and then automatically generate a second trigger event to stop the capture of image data once the apparatus stabilizes or resumes normal operation. This ensures that the recorded data captures the critical moments surrounding the sudden movement.

As another example, a shutdown detection system may generate a second trigger event responsive to the sprayer apparatus being powered off or entering a shutdown sequence.

In some examples, the portion of continually captured image data, stored responsive to a trigger event, may comprise a part of the continually captured image data from before the trigger event.

Accordingly, the processing system 120 may be configured to maintain a buffer memory that temporarily holds a second sub-portion of the continually captured image data (which may function as a pre-trigger event recording). This buffer acts as a rolling window, constantly updating with the most recent footage while discarding older data.

The second sub-portion may be of a second predetermined duration of the continually captured image data received by the processing system. In this way, the size of the buffer memory may be appropriately selected to hold the most recent X seconds of the continually captured image data, where X is the second predetermined duration.

When a trigger event occurs, the processing system may then retrieve and (permanently) store the buffered data from before the trigger event, e.g., in a memory device. This stored buffer data thereby functions as a second sub-portion of the continually captured image data. This approach allows the camera system to capture and preserve footage leading up to a trigger events, even if the trigger events were not anticipated in advance.

As a working example, if an operator notices an issue with the boom and initiates a manual trigger event, the camera system is able to save footage from a period preceding the manual trigger event, providing valuable context about the conditions and actions that may have led to the issue. Similarly, for automated triggers like sudden changes in vehicle movement or detected boom configuration errors, having pre-event footage can offer insights into the circumstances that precipitated the trigger event.

Of course, in some examples, the portion of continually captured image data, stored responsive to a trigger event, may comprise a part of the continually captured image data from after the trigger event and from before the trigger event. Thus, the portion of the continually captured image data may comprise both the first sub-portion and the second sub-portion identified above.

By storing footage from both before and after the trigger event, the system ensures a complete record of the circumstances leading up to, during, and following the event of interest.

The processing system may be configured to combine pre-trigger and post-trigger footage into a single, continuous recording or dataset. This approach provides a seamless timeline of events, allowing for more effective analysis and understanding of the sprayer apparatus's operation and any issues that may have occurred.

In such examples, said portion may comprise a part of the continually captured image data during or either side of the trigger event. Thus, the portion may comprise pre-trigger data and post-trigger data.

Preferably, the duration of the portion of the continually captured image data, stored responsive to a trigger event, is no less than 30 seconds. This duration allows for a comprehensive capture of the event and its surrounding context, providing sufficient data for thorough analysis and understanding of the sprayer apparatus's operation during the period of interest.

As previously explained, the one or more cameras 101, 102 of the camera system are configured such that a combined field of view of the one or more cameras includes at least a portion of the boom.

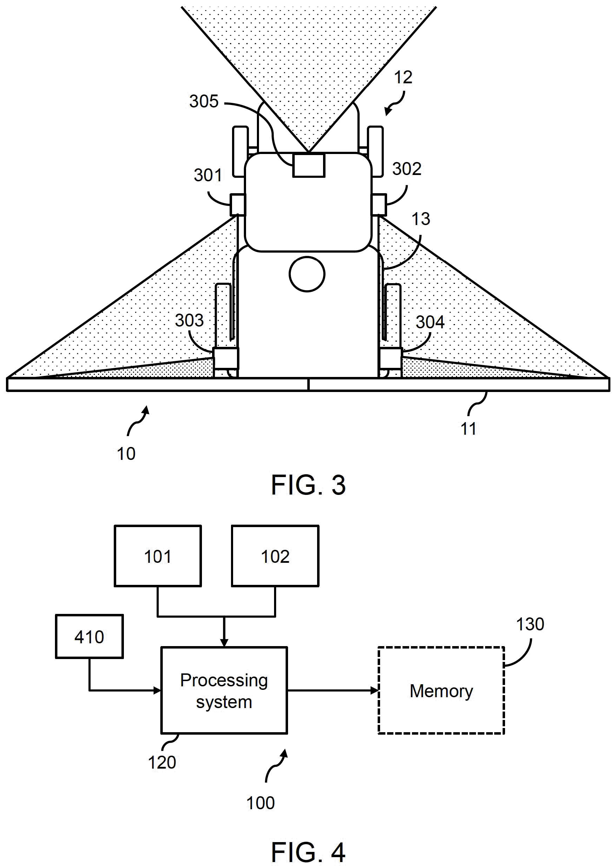

FIG. 3 provides a top-down view of an exemplary sprayer apparatus 10 for illustrating exemplary positions at which one or more cameras may be positioned. The sprayer apparatus 10 comprises a boom 11, a drive vehicle 12, and a product tank 13. The boom is positioned behind the drive vehicle.

The one or more cameras may comprise a first rear-facing camera 301 and a second rear-facing camera 302 for mounting in front of the boom and to each side of a drive vehicle to which the boom is coupled. Thus, the first and second rear-facing cameras may be mounted on either side of the drive vehicle and have a field-of-view facing the rear of the sprayer apparatus, to thereby capture image data of the boom.

Positioning the cameras in front of the boom allows for a clear line of sight to the boom structure, reducing a risk of potential blind spots.

The one or more cameras may comprise a first laterally outward facing camera 303 and a second laterally outward facing camera 304 mounted at a central area of the boom 11. Each laterally outward facing cameras may face opposite lateral directions towards a respective boom tip 10A, 10B.

By positioning cameras at the center of the boom and orienting them to face opposite directions, the one or more cameras are able to capture imagery of each boom (arm) extending towards its respective tip. This arrangement is useful for monitoring the length of the boom during operation, enabling detection of any irregularities or issues that may arise along the boom's span.

The one or more cameras may comprise one or more environment monitoring cameras 305, e.g., positioned to have a field of view that includes a region in front of the sprayer apparatus (e.g., away from the boom). This configuration is useful for monitoring an environment, and therefore possible cause of problems or issues, when a trigger event is received.

The one or more environment monitoring cameras may, for instance, be mounted upon a cabin 16 of the drive vehicle 12.

The above identified exemplary positions and cameras are non-exhaustive, and the skilled person would be readily capable of identifying additional positions and fields of view for cameras of the camera system, dependent upon the desired image data to be captured.

The camera system may comprise any one or more of the exemplary cameras identified above. In particular examples, the camera system may comprise a plurality of cameras (i.e., two or more cameras).

Preferably, a field of view of each camera is non-overlapping. This provides more efficient monitoring of the boom and surrounding environment.

FIG. 4 schematically illustrates a camera system 100 comprising a property monitoring sensor 410.

Although not illustrated, the camera system 100 may further comprise any other component of any other herein disclosed camera system (e.g., any component illustrated and described with reference to FIG. 2).

The property monitoring sensor 410 is configured to monitor one or more properties of the sprayer apparatus. Example properties include a boom position, boom height, fluid pressure, nozzle flow rates, vehicle speed, vehicle acceleration/deceleration, vehicle direction (e.g., steering angle and/or turning radius), boom vibration, engine RPM and so on. A wide variety of other monitorable properties of the sprayer apparatus will be readily apparent to the skilled person.

The processing system 120 may be configured to, responsive to the trigger event, record and store the monitored one or more properties of the sprayer apparatus.

In particular, the processing system may store a portion of the continually monitored property data, wherein the (stored) portion is a portion of the continually monitored property data identified immediately before and/or immediately after the trigger event.

More specifically, the (stored) portion of the continually monitored property data may temporally correspond to (i.e., cover a same time period as) the (stored) portion of the continually monitored image data. In other words, the (stored) portion of the continually monitored property data may correspond to the same time period as the stored portion of the continually captured image data. This synchronization of property data with image data provides a comprehensive view of the sprayer apparatus's state and operation during the period of interest.

The processing system may store the portion of the monitored one or more properties in a same file or dataset as the stored portion of image data.

Any herein described camera system may be further adapted to permit remote access to the continually captured image data produced by the one or more cameras.

Accordingly, the camera system may be configured to (e.g., responsive to an access request) stream or transmit captured (e.g., live) image data to an external/remote device (e.g., an external server or cloud-based storage system). The camera system may therefore comprise any suitable wireless communication module to establish a connection and communicate with the external server. This connection may be facilitated through any suitable wireless communication protocol, such as LoRaWAN, any cellular data network (e.g., 4G, 5G), or a satellite communication system, e.g., dependent upon any available infrastructure.

With this capability, the camera system is able to support real-time monitoring, allowing an individual to view a live stream of the continually captured image data. This feature provides immediate insights into the operation of the sprayer apparatus.

An access request to the camera system from an external or remote device may be initiated through a secure network connection. The external device, such as a smartphone, tablet, or computer, may communicate with the camera system via a cloud-based platform or directly through a wireless protocol, such as 4G, 5G, or satellite communication. A user may submit the request (e.g., via a dedicated application or web interface) via the remote device. The camera system processes the request and grants access to live-streamed image data, e.g., begins streaming the continually captured image data to the requesting external device. In some examples, the camera system may be configured to only begin providing a live-stream of image data responsive to an access request. This approach reduces (potentially) unnecessary data transmission, conserving bandwidth, network resources and energy/power usage. This configuration effectively allows operators to control when and how live-streaming occurs, enabling targeted monitoring during target or desired operations or events rather than indiscriminate, continuous data capture and streaming. The system may also allow the (e.g., user via the) remote device to specify parameters for the access request, such as selecting specific cameras, defining timeframes for stored data retrieval, or enabling additional features like synchronized property data.

The camera system may be configured to automatically terminate live streaming when the access session is ended or terminated by the user. This ensures that image data is only transmitted for the duration of the (e.g., authorized) session, further conserving bandwidth and reducing unnecessary data transmission.

For improved security, the camera system may be configured to implement one or more authentication and encryption protocols for data transmission, to ensure that only authorized users are able to access the image data and system controls.

Proposed embodiments make use of a processing system. The processing system may be embodied in any suitable hardware configuration to perform the functions described.

In some examples, the processing system may comprise one or more microprocessors or microcontrollers designed to execute instructions and perform the functionality of any herein disclosed processing system. The processing system may also or otherwise incorporate specialized hardware such as digital signal processors (DSPs) or field-programmable gate arrays (FPGAs) to perform this functionality.

In some examples, the processing system may comprise one or more dedicated memory units, such as high-speed RAM for temporary data storage and processing, as well as non-volatile memory like flash storage or solid-state drives for long-term data retention. The system may also feature dedicated hardware interfaces to connect with the cameras, sensors, and other peripheral devices.

The processing system may comprise one or more specialized image processing hardware, such as graphics processing units (GPUs) or vision processing units (VPUs), to efficiently handle the computational demands of real-time image analysis and trigger event detection. In some cases, the system may include hardware-accelerated machine learning capabilities to support advanced image recognition and analysis tasks.

The precise hardware implementation of the processing system may take any suitable form, and is immaterial to the underlying concept of the present disclosure.

The processing system may be positioned and/or integrated in various locations within the sprayer apparatus.

In some examples, the processing system may be mounted within the drive vehicle, such as in the cabin or in a dedicated compartment. This positioning may provide protection from environmental factors and allow for easy access by the operator.

In some examples, the processing system may be integrated with existing control systems of the sprayer apparatus. This integration may allow for seamless communication between the camera system and other operational components of the sprayer.

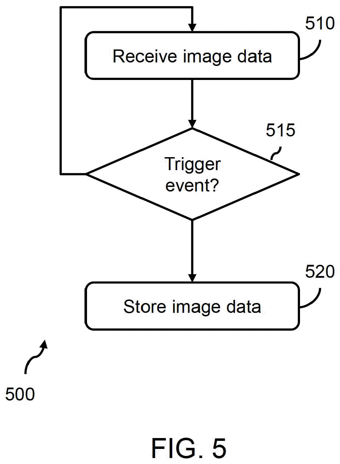

FIG. 5 illustrates a proposed (computer-implemented) method 500.

The method 500 comprises receiving 510 continually captured image data from one or more cameras configured to continually capture image data.

As previously described, the combined field of view of the one or more cameras comprises a portion of a boom of a sprayer apparatus. This act ensures that the system is continuously monitoring the boom and its surrounding environment.

In some examples, act 510 may comprise continually capturing image data using the one or more cameras. Thus, act 510 may be a passive act (e.g., simply receiving captured image data) or an active act (e.g., actively capturing the image data).

The method 500 further comprises, responsive to a trigger event, storing 520 a portion of the continually captured image data. This stored portion is a segment of the continually captured image data that was captured immediately before and/or immediately after the trigger event. The trigger event may be any of the previously described events, such as a user-initiated action, a detected boom configuration error, a sudden change in vehicle movement, or the initiation of a shutdown sequence.

Thus, the method 500 may comprise determining 515 whether or not a trigger event has occurred. Appropriate example approaches for performing this act have been previously described. Responsive to a positive determination in act 515 (i.e., a trigger event is detected) the method 500 moves to act 520. Otherwise, the method 500 may revert back to act 510.

By storing image data from before and/or after the trigger event, the method allows for comprehensive analysis of the circumstances surrounding the event of interest. This approach provides valuable context for understanding boom behavior, investigating incidents, or improving spraying operations, particularly during challenging maneuvers or terrain conditions.

The method may optionally include additional steps, such as processing the image data to identify boom configuration errors (e.g., for functioning as a trigger event), correlating the (portion of the) image data with (a portion of) property data from one or property monitoring sensors, or transmitting the stored data to a remote analysis system. These additional steps can enhance the utility of the captured data for improving sprayer performance and operational safety.

In particular, the method 500 may be adapted to perform the function(s) and/or act of any herein described camera system.

Proposed embodiments also provide a sprayer apparatus comprising the proposed camera system as described herein.

The sprayer apparatus may include a product tank for storing fluid to be sprayed, a boom structure with multiple spray nozzles, and a delivery system for transferring fluid from the product tank to the spray nozzles. The camera system may be integrated into this sprayer apparatus to provide real-time monitoring and data capture capabilities.

The camera system of the sprayer apparatus may incorporate multiple cameras positioned at appropriate strategic locations. For example, rear-facing cameras may be mounted on either side of a drive vehicle, providing a view of the boom structure. Laterally outward facing cameras may be positioned at the center of the boom, each directed towards a respective boom tip. Additionally, one or more environment monitoring cameras may be mounted on the cabin (or any other suitable location) of the drive vehicle to capture the area in front of the sprayer.

As previously mentioned, the camera system of the sprayer apparatus comprises a processing system that receives and processes the image data from these cameras. This processing system is configured to detect trigger events, such as boom configuration errors, sudden changes in vehicle movement, or user-initiated actions. Upon detecting a trigger event, the processing system stores a portion of the captured image data, including footage from immediately before and/or immediately after the trigger event.

In some implementations, the sprayer apparatus may also include property monitoring sensors that track various operational parameters such as boom position, fluid pressure, vehicle speed, and boom vibration. The processing system may correlate this sensor data with the captured image data, providing a comprehensive view of the sprayer's operation during events of interest.

The integration of this camera system into the sprayer may enhance operational safety, facilitate troubleshooting, and provide valuable data for improving spraying techniques and equipment design. By capturing and analyzing visual and sensor data around trigger events, the system may help operators and manufacturers better understand and optimize sprayer performance under various conditions.

There is also provided a computer program product (e.g., a non-transitory computer-readable medium) having stored thereon computer-executable instructions that, when executed by a processing system, cause the processing to perform operations of the herein described process system.

The computer-readable medium may include, but is not limited to, hard drives, solid-state drives, optical discs, flash memory, random access memory, read only memory, or other types of non-transitory data storage.

The computer-executable instructions may be written using any suitable programming language and may implement any of the functionalities of the processing system and/or camera system, including image capture, trigger event detection, data storage, and property monitoring.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. A camera system (100) for a sprayer apparatus (10), the camera system comprising:
one or more cameras (101, 102) configured to continually capture image data, wherein a combined field of view of the one or more cameras comprises a portion of a boom of the sprayer apparatus;
a processing system (120) configured to:
receive (510) the continually captured image data from the one or more cameras; and
responsive to a trigger event, store (520) a portion of the continually captured image data, wherein the portion is a portion of the continually captured image data captured immediately before and/or immediately after the trigger event.

2. The camera system of claim 1, wherein the portion of continually captured image data is image data captured over a predefined duration.

3. The camera system of claim 1 or 2, wherein the predefined duration is no less than 15 seconds.

4. The camera system of any one of claims 1 to 3, further comprising a user input interface (140) communicatively coupled to the processing system, wherein the user input interface is configured to generate the trigger event responsive to a user interaction with the user input interface.

5. The camera system of claim 4, wherein the user input interface comprises a button that, when pressed, generates the trigger event.

6. The camera system of any one of claims 1 to 4, further comprising an image processing system (150) configured to:
receive the continually captured image data; and
determine whether or not there is a boom configuration error by processing the continually captured image data; and
responsive to determining that there is a boom configuration error, generate the trigger event.

7. The camera system of any one of claims 1 to 6, wherein the one or more cameras comprises two or more cameras.

8. The camera system of claim 7, wherein a field of view of each camera is non-overlapping.

9. The camera system of any one of claims 1 to 8, comprising a first rear-facing camera (301) and a second rear-facing camera (302) for mounting in front of the boom and to each side of a drive vehicle to which the boom is coupled.

10. The camera system of any one of claims 1 to 9, wherein the camera system comprises a first laterally outward facing camera (303) and a second laterally outward facing camera (304) mounted at a central area of the boom and each facing outward in opposite lateral directions towards a respective boom tip.

11. The camera system of any one of claims 1 to 10, further comprising a property monitoring sensor (410) configured to monitor one or more properties of the sprayer apparatus,
wherein the processing system is configured to, responsive to the trigger event, record and store the monitored one or more properties of the sprayer apparatus.

12. The camera system of claim 11, wherein:
the property monitoring sensor is configured to continually monitor the one or more properties of the sprayer apparatus to produce continually monitored property data;
the processing system is configured to, responsive to the trigger event, store a portion of the continually monitored property data, wherein the portion is a portion of the continually monitored property data monitored during a time period as the portion of continually captured image data.

13. A sprayer apparatus (10) comprising:
a product tank (13);
a boom (11) comprising a plurality of spray nozzles (72); and
a delivery system for delivering fluid from the product tank to the spray nozzles; and
the camera system (100) of any one of claims 1 to 12.

14. A computer-implemented method (500) comprising:
receiving (510) continually captured image data from one or more cameras configured to continually capture image data, wherein a combined field of view of the one or more cameras comprises a portion of a boom of a sprayer apparatus; and
responsive to a trigger event:
store a portion of the continually captured image data, wherein the portion is a portion of the continually captured image data captured immediately before and/or immediately after the trigger event.

15. A computer program product comprising computer program code means which, when executed on a computing device having a processing system, cause the processing system to perform all of the steps of the computer-implemented method according to claim 14.
